# EUROPÄISCHE PATENTANMELDUNG

(11) **EP 0 838 440 A1**
(43) Veröffentlichungstag der Anmeldung: **29.04.1998**
(21) Anmeldenummer: 97402370.7
(22) Anmeldetag: 08.10.1997
(51) Int. Cl.: C03B 37/027

(54) **Verfahren und Vorrichtung zum Kühlen einer aus einer Glasvorform gezogenen optischen Glasfaser**

(30) Priorität: 25.10.1996 DE 19644350
(71) Anmelder: ALCATEL ALSTHOM COMPAGNIE GENERALE D'ELECTRICITE, 75008 Paris (FR)
(72) Erfinder: Rosenkranz, Jürgen, Dr., 41068 Mönchengladbach (DE); Reiners, Wilhelm, Dr., 41844 Wegberg (DE); Bartling, Franz-Peter, 40221 Düsseldorf (DE)
(74) Vertreter: Mende, Dirk

(57) **Zusammenfassung**

Zum Herstellen einer optischen Glasfaser wird eine Glas vor form (3) durch einen Ziehofen (1) geführt, an ihrem einen Ende auf Ziehtemperatur erwärmt und zur Glasfaser (5) ausgezogen. Die Glasfaser (5) wird durch die Verdampfung eines flüssigen Kühlmittels (9) abgekühlt. Auf die abgekühlte Glasfaser (5) wird zumindest eine Beschichtung (19) aufgebracht. Die Abkühlung der Glasfaser durch die Verdampfung eines flüssigen Kühlmittels ermöglicht eine sehr schnelle Abkühlung der Glasfaser und erlaubt daher auch bei kurzen Kühlstrecken eine hohe Faserziehgeschwindigkeit.

## Beschreibung

Die Erfindung betrifft ein Verfahren zum Herstellen einer optischen Glasfaser, bei dem eine Glasform durch einen Ziehofen geführt, an ihrem einen Ende auf Ziehtemperatur erwärmt und zur Glasfaser ausgezogen wird, die Glasfaser mittels eines Kühlmittels abgekühlt und auf die abgekühlte Glasfaser zumindest eine Beschichtung aufgebracht wird, bzw. eine Vorrichtung zum Herstellen einer optischen Glasfaser nach diesem Verfahren mit einem Ziehofen zum Erwärmen einer Glasform, einer Kühleinrichtung zum Abkühlen der gezogenen Glasfaser und einer Beschichtungseinrichtung.

Bei der Herstellung einer optischen Glasfaser aus einer Glasvorform wird die empfindliche Glasfaser nach dem Ziehen mit einer ein- oder mehrschichtigen Beschichtung versehen. Diese Beschichtung dient dazu, die Glasfaser vor mechanischen Beschädigungen zu schützen. Für das Aufbringen der Beschichtung auf die Glasfaser ist es erforderlich, die Glasfaser zuvor von einer Temperatur von annähernd 2000°C, die sie unmittelbar nach dem Ziehprozeß aufweist, auf unter 100°C abzukühlen. Um eine hohe Fertigungsgeschwindigkeit zu ermöglichen und eine ausreichende Abkühlung der Glasfaser vor ihrer Beschichtung zu gewährleisten, wird daher zwischen dem Ziehofen und einer nachfolgenden Beschichtungseinrichtung eine Kühleinrichtung angeordnet.

In der DE 40 22 131 A1 ist eine Kühleinrichtung zur Abkühlung von optischen Glasfasern beschrieben, bei der ein kühlender Gasstrom in einem von der Glasfaser durchlaufenen Kühlrohr an der Glasfaser entlanggeleitet wird. Zur Erhöhung der Wärmeabfuhr von der Glasfaser ist das Kühlrohr von einem Mantelrohr konzentrisch umgeben, in dem zusätzlich Kühlwasser geführt ist. Der kühlende Gasstrom leitet die Wärme von der Glasfaser an die wassergekühlte Wand des Kühlrohres ab, von wo aus sie durch das Kühlwasser abgeführt wird. Die Wärmekapazität und die Wärmeleitfähigkeit der für die Abkühlung der Glasfaser einsetzbaren Gase begrenzt allerdings die Geschwindigkeit der Wärmeabfuhr von der Glasfaser. Bei einer Erhöhung der Ziehgeschwindigkeit der optischen Glasfaser ist es daher erforderlich, die Kühlstrecke der Kühleinrichtung entsprechend zu verlängern. Dies führt aber zu einem höheren Platzbedarf der Herstellvorrichtung.

Ausgehend von diesem Stand der Technik liegt der Erfindung daher das Problem zugrunde, die aus einer Glasform gezogene optische Glasfaser auch bei hohen Fertigungsgeschwindigkeiten und einer kurzen Kühlstrecke zuverlässig auf eine für die nachfolgende Beschichtung der Glasfaser unkritische Temperatur abzukühlen.

Dieses Problem wird durch die Erfindung gelöst, indem die Glasfaser durch das Verdampfen eines flüssigen Kühlmittels abgekühlt wird bzw. die Kühleinrichtung eine von der Glasfaser durchlaufene, mit einem flüssigen Kühlmittel gefüllte Vorratskammer oder eine von der Glasfaser durchlaufene Beschichtungskammer zum Beschichten der Glasfaser mit einem flüssigen Kühlmittel aufweist.

Die durch die Erfindung erzielbaren Vorteile bestehen insbesondere darin, daß die Abkühlung der Glasfaser bei der Wahl eines geeigneten flüssigen Kühlmittels durch die Ausnutzung der für die Verdampfung des Kühlmittels erforderlichen Verdampfungswärme auf einer sehr kurzen Kühlstrecke erfolgen kann. Die für die Überführung einer Masseneinheit in den gasförmigen Aggregatzustand erforderliche Wärmemenge, die sogenannte spezifische Verdampfungswärme, ist nämlich bei den meisten Flüssigkeiten wesentlich größer als die Wärmekapazität eines zur Kühlung der Glasfaser geeigneten Gases, so daß die Wärmeenergie der Glasfaser durch das Verdampfen des die heiße Glasfaser umgebenden flüssigen Kühlmittels wesentlich schneller abgeführt werden kann. Die Höhe der Zieh- bzw. Fertigungsgeschwindigkeit der optischen Glasfaser wird daher bei der Anwendung des erfindungsgemäßen Verfahrens bzw. der erfindungsgemäßen Vorrichtung nicht durch die erforderliche Wärmeabfuhr von der Glasfaser und die Kühleinrichtung begrenzt. Zudem ist für die schnelle Abkühlung der Glasfaser nur eine vergleichsweise geringe Kühlmittelmenge notwendig. Darüber hinaus wird der für die Kühleinrichtung erforderliche Platzbedarf reduziert, so daß bei einer Erhöhung der Fertigungsgeschwindigkeit auf teure Umbaumaßnahmen verzichtet werden kann.

Durch die in den Unteransprüchen aufgeführten Merkmale sind vorteilhafte Weiterbildungen und Verbesserungen der Erfindung möglich.

Besonders vorteilhaft ist es, wenn als Kühlmittel ein verflüssigtes Gas verwendet wird, das bereits bei Zimmertemperatur abdampft. Dadurch kann ein rückstandsfreies Verdampfen des Kühlmittels gewährleistet werden. Als Kühlmittel eignen sich insbesondere verflüssigtes Argon, verflüssigter Stickstoff, sowie andere verflüssigte, nicht brennbare Gase.

Für eine besonders schnelle Abkühlung der Glasfaser ist es von Vorteil, wenn die Glasfaser durch das Kühlmittel hindurchgeführt und beim Eintritt in das flüssige Kühlmittel durch Verdampfen von Kühlmittel abgekühlt wird oder wenn auf die Glasfaser eine Schicht des Kühlmittels aufgebracht und die Glasfaser durch Verdampfen dieser Schicht abgekühlt wird.

Um zu gewährleisten, daß die Oberfläche der abgekühlten Glasfaser vor dem Aufbringen der Beschichtung frei von noch nicht verdampftem Kühlmittel ist, ist es von Vorteil, wenn an der Glasfaser ein Spülgas entlanggeleitet wird. Aus dem gleichen Grund ist es ebenfalls vorteilhaft, wenn in einer Reinigungseinrichtung vor dem Aufbringen der Beschichtung von der Glasfaser mitgeführtes Kühlmittel abgesaugt wird.

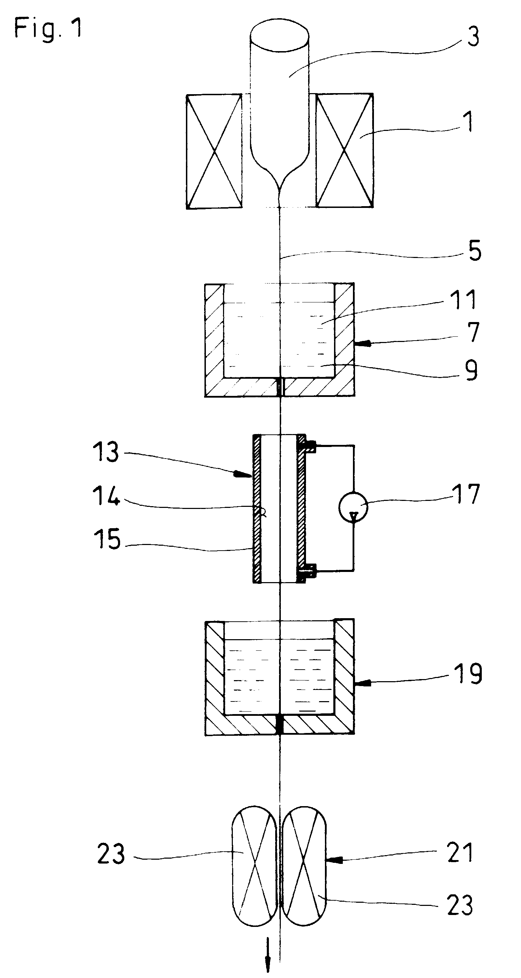

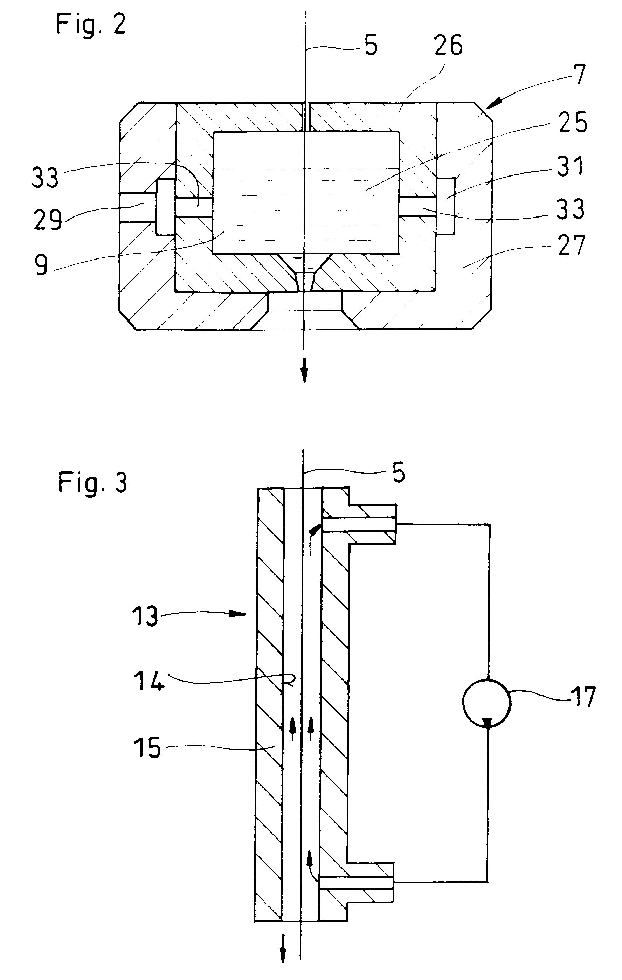

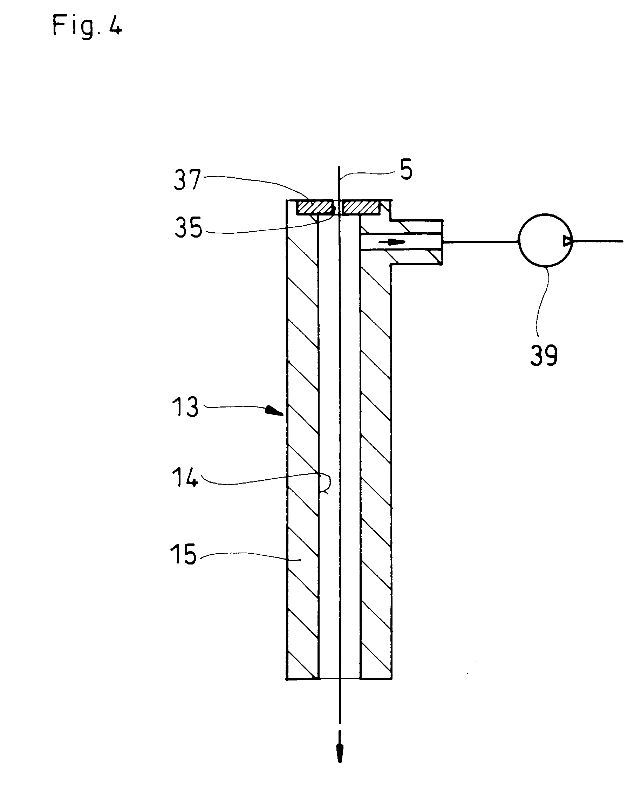

Ausführungsbeispiele der Erfindung sind in der Zeichnung vereinfacht dargestellt und in der nachfolgenden Beschreibung näher erläutert. Es zeigen die Fig. 1 ein erstes erfindungsgemäßes Ausführungsbeispiel der Vorrichtung, die Fig. 2 ein zweites erfindungsgemäßes Ausführungsbeispiel einer Kühleinrichtung, die Fig. 3 eine vergrößerte Ansicht der in der Fig. 1 dargestellten Reinigungseinrichtung sowie die Fig. 4 ein zweites erfindungsgemäßes Ausführungsbeispiel einer Reinigungseinrichtung.

Die in der Fig. 1 beispielhaft dargestellte Vorrichtung zum Herstellen einer optischen Glasfaser weist einen Ziehofen 1 auf, in dem das eine Ende einer Glasform 3, die üblicherweise auch als Preform bezeichnet wird, auf Ziehtemperatur erwärmt wird. Diese Ziehtemperatur entspricht der Schmelztemperatur der Glasform 3 und liegt bei annähernd 2000°C. Aus dem aufgeschmolzenen Ende der Glasform 3 wird eine optische Glasfaser 5 ausgezogen und durch eine Kühleinrichtung 7 hindurchgeführt. Die Kühleinrichtung 7 weist z. B. eine mit einem flüssigen Kühlmittel 9, beispielsweise einem verflüssigten, nicht brennbaren Gas wie Argon oder Stickstoff gefüllte Vorratskammer 11 auf. Beim Eintritt in das flüssige Kühlmittel 9 sowie bei ihrem weiteren Durchlauf durch die Kühleinrichtung 7 wird die Glasfaser 5 durch die Verdampfung von flüssigem Kühlmittel 9 an ihrer Oberfläche und die dabei abgegebene Wärmemenge abgekühlt.

Zur Beseitigung von von der Glasfaser 5 mitgeführten Rückständen des flüssigen Kühlmittels 9 ist bei dem dargestellten Ausführungsbeispiel im Anschluß an die Kühleinrichtung 7 eine Reinigungseinrichtung 13 vorgesehen. Die Reinigungseinrichtung 13 hat beispielsweise ein eine durchgehende Längsbohrung 14 aufweisendes Führungsrohr 15, durch das die Glasfaser 5 hindurchgeführt wird. In der Längsbohrung 14 wird ein Spülgas wie z. B. Stickstoff, Helium, Argon oder ein anderes Gas entgegen der Durchlaufrichtung der Glasfaser 5 an dieser entlanggeleitet. Das Spülgas wird z. B. an dem der Kühleinrichtung 7 abgewandten Ende des Führungsrohres 15 in die Längsbohrung 14 zugeführt und an dem der Kühleinrichtung 7 zugewandten Ende mittels einer Pumpe 17 aus dem Führungsrohr 15 abgesaugt.

An die Reinigungseinrichtung 13 schließt sich in Durchlaufrichtung der Glasfaser 5 eine Beschichtungseinrichtung 19 an, die in der Fig. 1 in vereinfachter Form als Beschichtungstopf dargestellt ist. In der Beschichtungseinrichtung 19 wird eine die Glasfaser 5 vor mechanischen Beschädigungen schützende Beschichtung auf die Glasfaser 5 aufgebracht. Bei dem Beschichtungsmaterial handelt es sich beispielsweise um einen durch UV-Licht aushärtbaren Lack, der in einer nachfolgenden Aushärteeinrichtung 21 mittels UV-Lampen 23 ausgehärtet wird. Es ist selbstverständlich ebenfalls möglich, eine aus mehreren Schichten unterschiedlicher Eigenschaften bestehende Beschichtung auf die Glasfaser 5 aufzubringen.

Die Fig. 2 zeigt beispielhaft eine Kühleinrichtung 7, in der die Glasfaser 5 durch eine Beschichtungskammer 25 geführt und mit einem flüssigen Kühlmittel 9 beschichtet wird. Die Kühleinrichtung 7 hat beispielsweise ein äußeres Gehäuse 27, in dem eine die Beschichtungskammer 25 aufweisende Beschichtungseinheit 26 angeordnet ist. Das Kühlmittel 9 wird beispielsweise unter Druck stehend durch eine in der Wandung des Gehäuses 27 ausgebildete Zufuhrbohrung 29 und einen zwischen dem Gehäuse 27 und dem Umfang der Beschichtungseinheit 26 gebildeten Ringraum 31 und von diesem durch z. B. zwei durch die Wandung der Beschichtungeinheit 26 hindurchgehende, von dem Ringraum 31 in die Beschichtungskammer 25 führende Zufuhrkanäle 33 in die Beschichtungskammer 25 zugeführt und als Schicht auf die Glasfaser 5 aufgebracht. Die Glasfaser 5 wird bei dieser Kühleinrichtung 7 sowohl unmittelbar bei ihrem Eintritt in die Beschichtungskammer 25 als auch insbesondere durch das Verdampfen der in der Beschichtungseinheit 26 auf die Glasfaser 5 aufgebrachten Schicht des Kühlmittels 9 abgekühlt.

Die Fig. 3 zeigt eine vergrößerte Ansicht der in der Fig. 1 dargestellten Reinigungseinrichtung 13. Die optische Glasfaser 5 wird dabei durch die Längsbohrung 14 des Führungsrohrs 15 der Reinigungseinrichtung 13 geführt. In der Durchlaufrichtung der Glasfaser 5 entgegengesetzter Richtung wird die Längsbohrung 14 von einem Spülgas durchströmt, das von der Glasfaser 5 mitgeführtes, nicht verdampftes Kühlmittel 9 abstreift und dadurch gewährleistet, daß die Glasfaser 5 ohne Kühlmittelrückstände oder andere Verunreinigungen an ihrer Oberfläche aufzuweisen in die nachfolgende Beschichtungseinrichtung 19 gelangt. Das Spülgas wird an dem dem Fasereintritt abgewandten Ende der Längsbohrung 14 in diese zugeführt und nahe dem Fasereintritt mittels einer Pumpe 17 aus der Längsbohrung 14 abgesaugt. Handelt es sich bei dem Spülgas beispielsweise um Stickstoff, so ist eine Absaugung des Spülgases nicht unbedingt erforderlich und das Spülgas kann unmittelbar am Eintritt der Glasfaser aus dem Führungsrohr 15 in die Umgebung austreten.

In der Fig. 4 ist eine Reinigungseinrichtung 13 dargestellt, die ohne die Verwendung eines Spülgases auskommt. Die Reinigungseinrichtung 13 weist ein Führungsrohr 15 mit einer durchgehenden Längsbohrung 14 auf, durch die die Glasfaser 5 hindurchgeführt wird. An dem Eintritt der Glasfaser 5 in das Führungsrohr 15 ist eine eine enge Durchgangsbohrung 35 aufweisende Blende 37 angeordnet. Dabei ist der freie Durchmesser der Durchgangsbohrung 35 nur geringfügig größer als der Durchmesser der Glasfaser 5 und gewährleistet auf diese Weise, daß bereits am Eintritt in die Reinigungseinrichtung 13 von der Glasfaser 5 mitgeführtes Gas sowie unter Umständen sogar mitgeführtes flüssiges Kühlmittel 9 abgestreift wird und keine zusätzliche Raumluft in die Längsbohrung 14 des Führungsrohrs 15 gelangt. Die Längsbohrung 14 des Führungsrohrs 15 steht in Durchlaufrichtung der Glasfaser 5 gesehen unmittelbar hinter der Blende 37 mit einer Pumpe 39 in Verbindung, mit deren Hilfe von der Glasfaser 5 mitgeführtes Kühlmittel 9 sowie gegebenenfalls mitgeführte Raumluft zuverlässig abgesaugt wird.

## Patentansprüche

1. Verfahren zum Herstellen einer optischen Glasfaser, bei dem eine Glasform durch einen Ziehofen geführt, an ihrem einen Ende auf Ziehtemperatur erwärmt und zur Glasfaser ausgezogen wird, die Glasfaser mittels eines Kühlmittels abgekühlt und auf die abgekühlte Glasfaser zumindest eine Beschichtung aufgebracht wird, dadurch gekennzeichnet, daß die Glasfaser (5) durch das Verdampfen eines flüssigen Kühlmittels (9) abgekühlt wird.

2. Verfahren nach Anspruch 1, dadurch gekennzeichnet, daß als Kühlmittel (9) ein verflüssigtes Gas verwendet wird.

3. Verfahren nach Anspruch 1 oder 2, dadurch gekennzeichnet, daß die Glasfaser (5) durch das Kühlmittel (9) hindurchgeführt wird.

4. Verfahren nach einem der Ansprüche 1 bis 3, dadurch gekennzeichnet, daß die Glasfaser (5) beim Eintritt in das flüssige Kühlmittel (9) abgekühlt wird.

5. Verfahren nach einem der Ansprüche 1 bis 3, dadurch gekennzeichnet, daß auf die Glasfaser (5) eine Schicht des Kühlmittels (9) aufgebracht und die Glasfaser (5) durch Verdampfen dieser Schicht abgekühlt wird.

6. Verfahren nach einem der Ansprüche 1 bis 5, dadurch gekennzeichnet, daß vor dem Aufbringen der Beschichtung an der Glasfaser (5) ein Spülgas entlanggeleitet wird.

7. Verfahren nach einem der Ansprüche 1 bis 5, dadurch gekennzeichnet, daß vor dem Aufbringen der Beschichtung von der Glasfaser (5) mitgeführtes Kühlmittel (9) abgesaugt wird.

8. Vorrichtung zum Herstellen einer optischen Glasfaser nach einem der Ansprüche 1 bis 4 sowie 6 und 7 mit einem Ziehofen zum Erwärmen einer Glasform, einer Kühleinrichtung zum Abkühlen der gezogenen Glasfaser und einer Beschichtungseinrichtung, dadurch gekennzeichnet, daß die Kühleinrichtung (7) eine von der Glasfaser (5) durchlaufene, mit einem flüssigen Kühlmittel (9) gefüllte Vorratskammer (11) aufweist.

9. Vorrichtung zum Herstellen einer optischen Glasfaser nach einem der Ansprüche 1 bis 3 sowie 5 bis 7 mit einem Ziehofen zum Erwärmen einer Glasform, einer Kühleinrichtung zum Abkühlen der gezogenen Glasfaser und einer Beschichtungseinrichtung, dadurch gekennzeichnet, daß die Kühleinrichtung (7) eine von der Glasfaser (5) durchlaufene Beschichtungskammer (25) zum Beschichten der Glasfaser (5) mit einem flüssigen Kühlmittel (9) aufweist.

10. Vorrichtung nach Anspruch 8 oder 9, dadurch gekennzeichnet, daß zwischen der Kühleinrichtung (7) und der Beschichtungseinrichtung (19) eine Reinigungseinrichtung (13) zum Entfernen von Kühlmittel (9) von der Glasfaser (5) vorgesehen ist.
